# EUROPEAN PATENT SPECIFICATION

(11) **EP 4 437 409 B1**
(45) Date of publication and mention of the grant of the patent: **13.08.2025**
(21) Application number: 22850948.5
(22) Date of filing: 16.12.2022
(51) Int. Cl.: G06F 8/60, G06F 9/445

(54) **INDEPENDENT PUBLISHING AND SERVING OF APPLICATIONS AND SOFTWARE DEVELOPMENT KITS**
UNABHÄNGIGE VERÖFFENTLICHUNG UND BEREITSTELLUNG VON ANWENDUNGEN UND SOFTWAREENTWICKLUNGSKITS
PUBLICATION ET SERVICE INDÉPENDANTS D'APPLICATIONS ET KITS DE DÉVELOPPEMENT DE LOGICIEL

(30) Priority: 04.02.2022 US 202263267573 P
(43) Date of publication of application: 02.10.2024
(73) Proprietor: Google LLC, Mountain View, CA 94043 (US)
(72) Inventor: DOVIS, Alessandro, London, Greater London N1C 4AG (GB); CHURCHILL, Martin David, London, Greater London N1C 4AG (GB); LECESNE, Pierre Carlos Eduardo, London N1C 4AG (GB); CHANDGADKAR, Abhijit, London N1C 4AG (GB); BECHER, Yafit, 6789141 Tel Aviv-Yafo (IL); AYRES, John William, London, Greater London N1C 4AG (GB); GLUCK, Yaakov, London, Greater London N1C 4AG (GB); DÍAZ DE TERÁN, Borja, 28020 Madrid, Madrid (ES)
(74) Representative: Davis, Steven George
(86) International application number: PCT/US2022/081748
(87) International publication number: WO 2023/149988

(56) References cited:
- US-A1- 2019 369 978

## Description

### FIELD OF THE INVENTION

The invention is about packaging and distributing of software development kits (SDKs).

### BACKGROUND

Software development kit (SDK) developers currently publish their libraries as a platform or computer language based archive. A library may depend on other libraries (known as transitive dependencies). Similar to applications (e.g., applications that run on mobile devices), these dependencies are declared in a library's build file. Once the library is ready to be shared, SDK developers distribute their libraries to application developers to integrate into their applications. A single SDK can contain one or more libraries. When an application is packaged, all the libraries it depends on (direct and transitive) are downloaded from repositories, conflicting library artifacts are resolved, and the code is compiled and merged with the application entries (e.g., exe files, native files, resources, assets, etc.).

US 2019/369978 A1 discloses interfaces for receiving software development kit runtime binaries configured for a standardized platform; receiving a driver framework package that is generated based on the software development kit and configured to enable extensibility under a set of constraints; and interacting with first party frameworks and allowing third party frameworks to access the software development kit runtime binaries and allow applications to use the third party frameworks.

### SUMMARY

The claims define the matter for protection.

In general, techniques of this disclosure are directed to separate packaging and distribution of software development kits (SDKs) and their respective application(s) that depend on them during runtime. In one example, the packaging and distribution are performed by a central computing system that serves the application developers, SDK developers, and users that download and install applications and SDK packages to their devices. As such, the techniques of this disclosure may take advantage of version control and distribution of the SDK builds, enforce policies (e.g., data access and privacy) associated with the interplay between an SDK build and an associated application, provide updates to SDK builds without requiring an application update, among other advantages.

In one example, this disclosure describes a method that includes receiving, by a computing system, a software development kit (SDK) bundle, wherein the SDK bundle comprises one or more SDK builds; packaging the SDK bundle into an SDK package configured to be installed on a device for access by one or more applications installed on the device, wherein each application is dependent upon an SDK build of the one or more SDK builds during runtime; and outputting the SDK package comprising the one or more SDK builds to the device, wherein each SDK build is configured to run in a separate process on the device with respect each corresponding application.

In another example, a computing device includes a memory and one or more processors operably coupled to the memory and configured to receive a software development kit (SDK) bundle, wherein the SDK bundle comprises one or more SDK builds; package the SDK bundle into an SDK package configured to be installed on a device for access by one or more applications installed on the device, wherein each application is dependent upon an SDK build of the one or more SDK builds during runtime; and output the SDK package comprising the one or more SDK builds to the device, wherein each SDK build is configured to run in a separate process on the device with respect each corresponding application.

In another example, this disclosure describes a method that includes receiving, by a user computing device, an install package that includes an application package and a software development kit (SDK) package, wherein an application in the application package declares a dependency on an SDK version; determining, by the user computing device, that an SDK in the SDK package matches the dependency declared by the application; running, by the user computing device, the SDK in a first process on the user computing device; running, by the user computing device, the application in a second process on the user computing device, the second process on the user computing device being distinct from the first process on the user computing device, wherein the SDK in the first process on the user computing device is restricted from access to data of the application in the second process on the user computing device and the application uses functionality of the SDK in a first process on the user computing device.

In another example, a computing device comprising means for receiving a software development kit bundle, wherein the software development kit bundle includes one or more software development kit builds, packaging the software development kit bundle into a software development kit package configured to be installed on a device for access by one or more applications installed on the device, wherein each application from the one or more applications installed on the device is dependent upon at least one software development kit build from the one or more software development kit builds during runtime, and providing, by the computing device and to the device (e.g., user computing system), the software development kit package including the one or more software development kit builds, wherein each software development kit build from the one or more software development kit builds is configured to run in a process on the device distinct from one or more processes in which the one or more applications run on the device.

The details of one or more examples of the disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example SDK and application publishing system, in accordance with one or more aspects of the present disclosure.
FIG. 2A is a block diagram illustrating an example computing system for generating software packages for distribution to user devices, in accordance with one or more aspects of the present disclosure.
FIG. 2B is a block diagram illustrating an example user computing device that sandboxes an SDK for an application in accordance with one or more aspects of the present disclosure.
FIG. 3 is a diagram illustrating examples of published versions of stand-alone SDK builds that may be distributed and installed via a software package that includes SDK package on user devices.
FIG. 4 is a diagram illustrating an example workflow showing a flows to publish an SDK package including SDK builds that may be distributed and installed via a software package, in accordance with one or more aspects of the present disclosure.
FIG. 5 is a flowchart illustrating an example mode of operation for a computing device to generate software packages for distribution to user devices, in accordance with one or more aspects of the present disclosure.
FIG. 6 is a flowchart illustrating an example mode of operation for a user computing device to run an SDK and application in different processes, in accordance with one or more aspects of the present disclosure.

### DETAILED DESCRIPTION

Throughout the disclosure, examples are described where a computing system is configured for separately packaging and distributing software development kits (SDKs) that may include one or more libraries and their respective application(s) that depend on them. The application and SDK builds are often inseparable when delivered to the device (e.g., bundled into an executable file). Because they are bundled together, the SDK has the same data access as the application creating a security and privacy concern. Separation of the SDK from the device/client application not only isolates the SDK, but also enables the SDK to be updated independently from the application release and update lifecycle.

The separation and SDK policies provide control for a SDKs' data access on devices by running in isolation with respect to the application, such as by running in an "SDK Sandbox." The SDK Sandbox includes SDKs that run in a separate process, thus creating clear boundaries between applications and SDKs and limiting SDK's data access, separate context, and no permissions. The platform may uninstall and manage the SDKs, control the SDK lifecycle on the device (including updating and disabling), and provide a kill switch for individual SDKs. The platform may prevent users of a device from uninstalling SDKs.

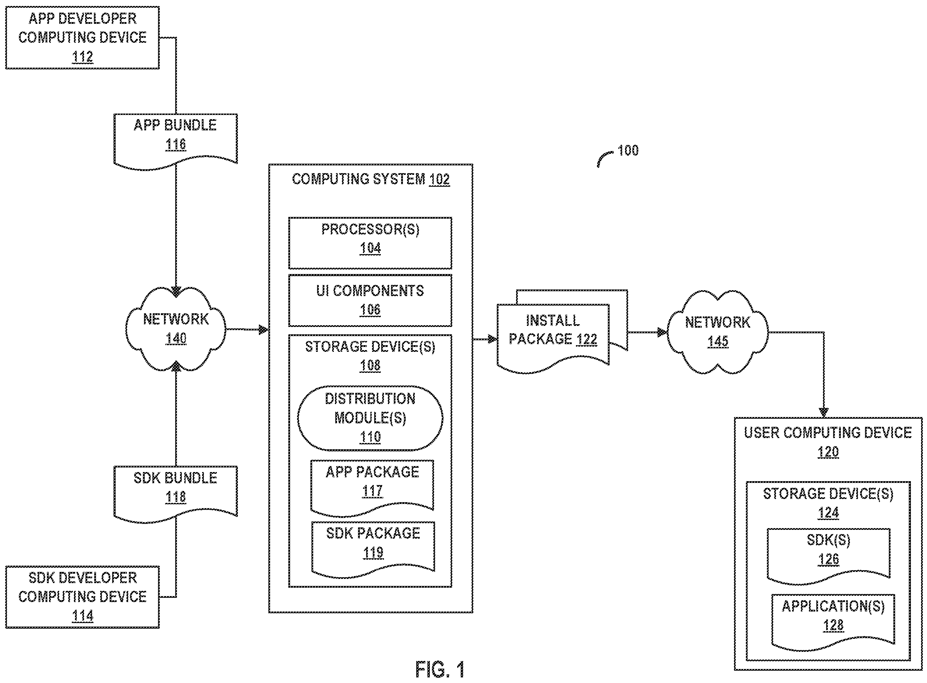

FIG. 1 is a block diagram illustrating an example SDK and application publishing system 100, in accordance with one or more aspects of the present disclosure. Application publishing system 100 includes computing system 102, application developer computing device 112, SDK developer computing device 114, and user computing device 120. In some examples, computing system 102 may include stationary computing devices such as desktop computers. servers. mainframes, etc., and may be in communication with remote computing systems, such as application developer computing device 112 and SDK developer computing device 114, over one or more networks, such as network 140 and network 145.

As shown in FIG. 1, computing system 102 includes processors 104, UI components 106 and storage devices 108. Storage devices 108 includes distribution modules 110, application package 117 and SDK package 119. In one example, application developer computing device 112 and SDK developer computing device 114 may upload application bundle 116 and SDK bundle 118, respectively, to the computing system 102 through network 140. In one example, computing system 102 may receive and package, using processors 104 and distribution modules 110, application bundle 116 and SDK bundle 118 into application package 117 and SDK package 119. Distribution modules 110 may generate install package 122 that includes one or both of application package 117 and SDK package 119. Computing system 102 may provide the software package to user computing device 120 through network 145. Install package 122 includes one or more SDK builds and may include an application build, each installable on user computing device 120.

In one example, user computing device 120 installs. from install package 122, SDK 126 including one or more SDK builds and application 128, each running in a separate process on user computing device 120. Application 128 is dependent upon an SDK build of the one or more SDK builds during runtime. In another example. application 128 is resident on user computing device 120 and install package 122 includes an update to SDK 126 and includes a newer version of an SDK build compatible with application 128.

In one example, network 140 and network 145 are the same network, in other examples they are different networks using the same or different communication protocols. Network 140 and network 145 may include network hubs, network switches, network routers. etc., that are operatively inter-coupled thereby providing for the exchange of information between computing system 102, application developer computing device 112, SDK developer computing device 114, and user computing device 120. In some examples. communication links associated with network 140 and network 145 may be wireless and/or wired connections, Ethernet, asynchronous transfer mode (ATM) or other network connections.

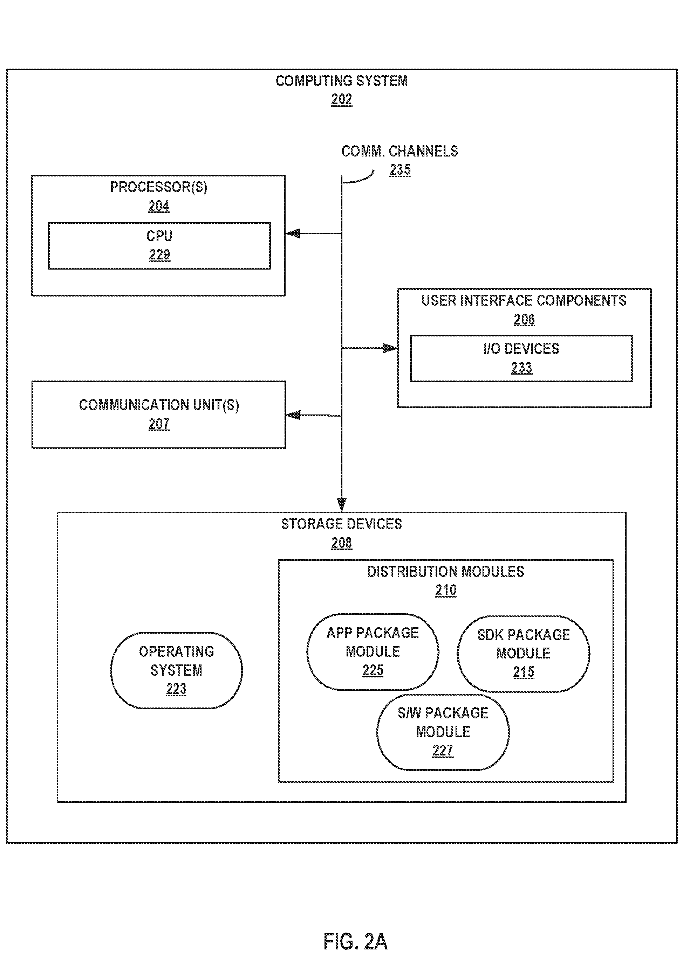

FIG. 2A is a block diagram illustrating example computing system 202 for generating software packages for distribution to user devices, in accordance with one or more aspects of the present disclosure. FIG. 2A illustrates one example of computing system 102, as illustrated in FIG. 1. Computing system 202 may include stationary computing devices such as desktop computers. servers. mainframes, etc., and may be in communication with remote computing systems (e.g.. application developer computing device 112 and SDK developer computing device 114), over one or more networks (e.g., network 140 and network 145). Many other examples of computing system 202 may be used in other instances and may include a subset of the components included in example computing system 202 or may include additional components not shown in FIG. 2A.

As shown in the example of FIG. 2A, computing system 202 includes processors 204, one or more input/output components, such as user interface components (UIC) 206, one or more communication units 207, and one or more storage devices 208. Storage devices 208 of computing system 202 may include distribution modules 210 and operating system 223, and UIC 206 may include I/O (input/output) devices 233. Distribution modules 210 may include application package module 225, SDK package module 215 and software package module 227. The one or more communication units 207 of computing system 202, for example, may communicate with external devices by transmitting and/or receiving data at computing system 202, such as to and from SDK package module 215 and software package module 227 and remote computer systems, such as application developer computing device 112, SDK developer computing device 114, and user computing device 120 of FIG. 1. For example, computing system 202 may receive, through communication units 207, application bundle 116 and SDK bundle 118 from application developer computing device 112 and SDK developer computing device 114, respectively. Application package module 225 generates an application package (e.g., application package 117) and SDK package module 227 generates an SDK package (e.g., SDK package 119) that includes one or more SDK builds.

In one example, software package module 227 combines the application package and the SDK package into a software package for sending to a device, such as user computing device 120. In another example, software package module 227 sends the application package and the SDK package in separate packages (e.g., files) in the same or separate transmissions to user computing device 120.

In another example, to support backwards compatibility, software package module 227 may generate the install package 122 by merging the SDK package (e.g., SDK package 119) into the application package (e.g., application package 117) for distribution to user devices that do not support runtime separation of SDKs from applications.

Example communication units 207 include a network interface card (e.g., such as an Ethernet card), an optical transceiver, a radio frequency transceiver, or any other type of device that may send and/or receive information. Other examples of communication units 207 may be devices configured to transmit and receive Ultrawideband^{®}, Bluetooth^{®}, GPS, 3G, 4G, and Wi-Fi^{®}, etc. that may be found in computing devices, such as mobile devices and the like. As shown in the example of FIG. 2A, communication channels 235 may interconnect each of the components as shown for inter-component communications (physically, communicatively, and/or operatively). In some examples, communication channels 235 may include a system bus, a network connection (e.g., to a wireless connection as described above), one or more inter-process communication data structures, or any other components for communicating data between hardware and/or software locally or remotely.

One or more storage devices 208 within computing system 202 may store information, such as data associated with SDK bundles, SDK builds, application bundles and application builds, SDK packages, application packages, software packages and other data discussed herein, for processing during operation of computing system 202. In some examples, one or more storage devices of storage devices 208 may be a volatile or temporary memory. Examples of volatile memories include random access memories (RAM), dynamic random access memories (DRAM), static random access memories (SRAM), and other forms of volatile memories known in the art. Storage devices 208, in some examples, may also include one or more computer-readable storage media. Storage devices 208 may be configured to store larger amounts of information for longer terms in non-volatile memory than volatile memory. Examples of non-volatile memories include magnetic hard discs, optical discs, floppy discs, flash memories, or forms of electrically programmable memories (EPROM) or electrically erasable and programmable (EEPROM) memories. Storage devices 208 may store program instructions and/or data associated with operating system 223 and distribution modules 210.

One or more I/O devices 233 of computing system 202 may receive inputs and generate outputs. Examples of inputs are tactile, audio, kinetic, and optical input, to name only a few examples. Input devices of I/O devices 233, in one example, may include a touchscreen, a touch pad, a mouse, a keyboard, a voice responsive system, a video camera, buttons, a control pad, a microphone or any other type of device for detecting input from a human or machine. Output devices of I/O devices 233, may include, a sound card, a video graphics adapter card, a speaker, a display, or any other type of device for generating output to a human or machine.

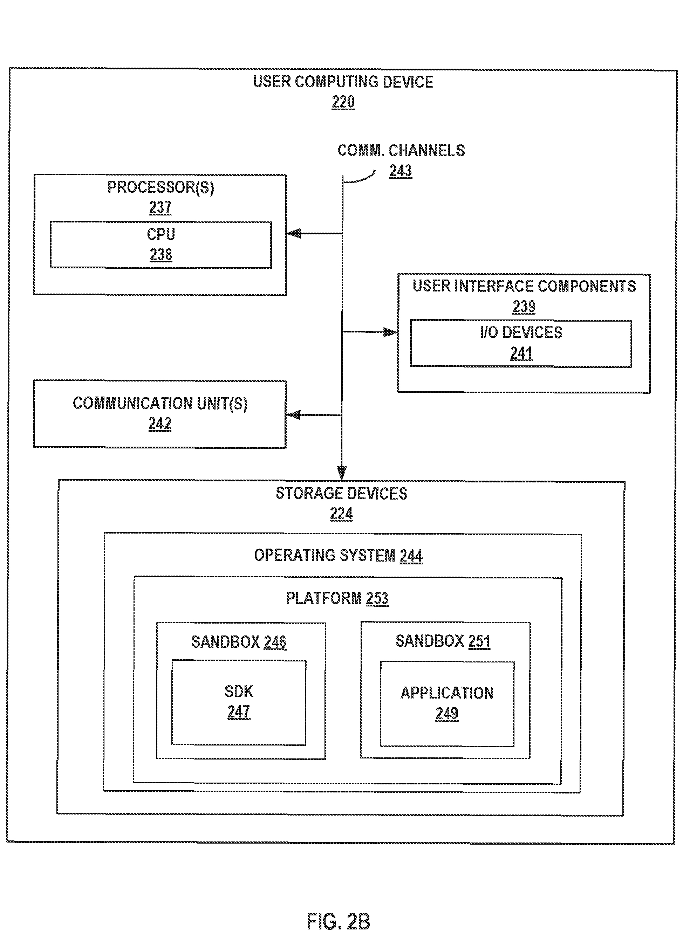

One or more of distribution modules 210 may perform operations described herein using software, hardware, firmware, or a mixture of both hardware, software, and firmware residing in and executing on computing system 202 or at one or more other remote computing devices (e.g., cloud-based application - not shown). Computing system 202 may execute distribution modules 210, such as application package module 225, SDK package module 215 and software package module 227, with one or more processors 2.04 or may execute any or part of distribution modules 210 as or within a virtual machine executing on underlying hardware. Distribution modules 210 may be implemented in various ways, for example, as a downloadable or pre-installed application, remotely as a cloud application or as part of operating system 223 of computing system 202. Other examples of computing system 202 that implement techniques of this disclosure may include additional components not shown in FIGS. 1, 2A or 2B.

In the example of FIG. 2A, one or more processors 204 may implement functionality and/or execute instructions within computing system 202. For example, one or more processors 204 may receive and execute instructions that provide the functionality of UIC 206, communication units 207, and one or more storage devices 208 and operating system 223 to perform one or more operations as described herein. One or more processors 204 may include central processing unit (CPU) 229. Examples of CPU 229 include, but are not limited to, a digital signal processor (DSP), a general-purpose microprocessor, a tensor processing unit (TPU); a neural processing unit (NPU); a neural processing engine; a core of a CPU, VPU, GPU, TPU, NPU or other processing device, an application specific integrated circuit (ASIC), a field programmable logic array (FPGA), or other equivalent integrated or discrete logic circuitry, or other equivalent integrated or discrete logic circuitry.

One or more processors 204 may implement functionality and/or execute instructions within computing system 202. For example, one or more processors 204 may receive and execute instructions that provide the functionality of some or all of distribution modules 210 to perform one or more operations and various functions described herein to package and distribute one or more SDK packages and one or more application packages. For example, SDK builds may be formatted as a stand-alone runnable object such that the SDK package plus all dependencies are packaged together in a single deliverable item independent of the application package.

In one example, the SDK and its associated application may depend on different versions of a common library (not shown). In such a case, the SDK package module (e.g., SDK package module 215) may rename and repackage those dependencies based in the common library so as not to clash with an application library of same name and different version. In examples that use major and minor version types, when multiple applications on a device depend on the same major version of the SDK, then all those applications will depend on the same minor version of the SDK.

Distribution modules 210 may enable application developers to build a single application or artifact to target user computing devices that support the separated SDK and application as well as user computing devices that do not support the separated SDK and application. Application developers may rely on distribution modules 210 to correctly distribute to target user computing devices that support the separated SDK and application and target computing devices that do not support the separated SDK and application. Software package module 227 of distribution modules 210 may generate a combined package by merging the SDK package into the application package for distribution to user computing devices that do not support runtime separation of SDKs from applications. Software package module 227 may also send the application package and the SDK package as separate packages for user computing devices that support the separated SDK and application. Application developers merely have to provide the application and an indication of the SDK (such as an indication of a major version of the SDK in a declaration of dependency) to distribution modules 210.

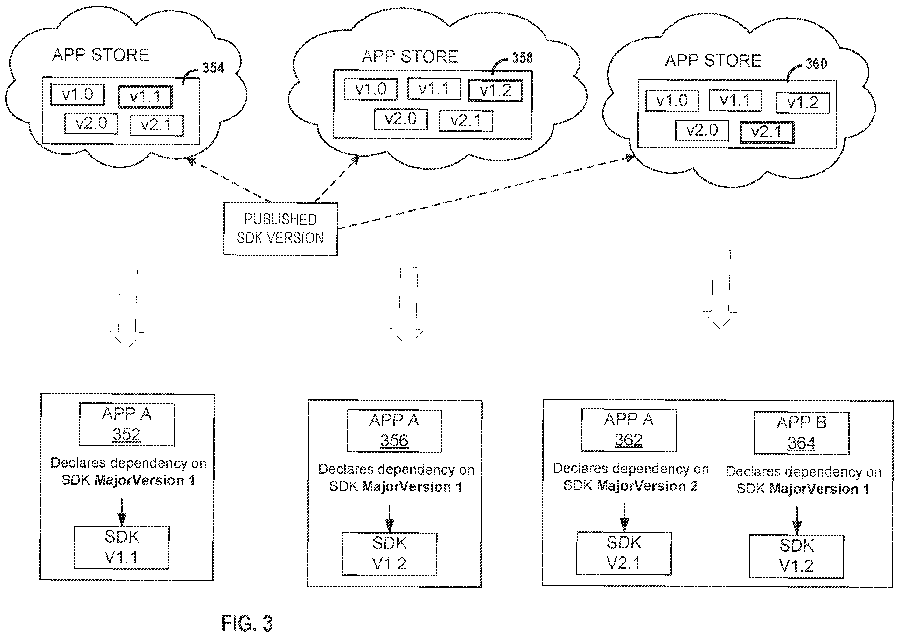

Distribution modules 210 may enable application developers to have some guarantees on which SDK versions will be deployed with their application, such as by using a declaration of dependency. As described below with respect to FIG. 3, application developers may declare that an application has a dependency on a major version of an SDK. When a user computing device does not support runtime separation of SDKs from applications, software package module 227 of distribution modules 210 may generate a combined package by merging the SDK package, as indicated by the declaration of dependency, with the application package for distribution. When a user computing device does support runtime separation of SDKs from applications, software package module 227 of distribution modules 210 may provide the SDK package as indicated by the declaration of dependency. The declaration of dependency may also be provided to the user computing device to ensure that it uses the correct SDK version.

Distribution modules 210 may enable SDK developers to progressively roll out new versions, detect issues quickly, and rollback if necessary. Distribution modules 210 may be used to associate the SDK versions with the applications. New minor versions of the SDK may quickly be introduced using distribution modules 210. A new SDK version may be associated with applications as soon as it is provided to distribution modules 210 at computing system 202. Because computing system 202 distributes to many user computing devices, it may receive centralized feedback on issues with an SDK version which may be provided to the SDK developer. Such feedback may be more immediate than feedback from application developers using the SDK version.

Distribution modules 210 at computing system 202 may provide a central location for the rollback of an SDK version. Distribution modules 210 may disable an SDK version to be rolled back for an older SDK version. The older SDK version may be provided to user computing devices that support runtime separation of SDKs from applications as well as instructions to disable the newer SDK version. Distribution modules 210 may produce a combined package for the rollback by merging the older SDK with the application and providing them as a package to user computing devices that do not support runtime separation of SDKs from applications. Rollback of an SDK version through the centralized computing system 202 is quicker and more efficient than rollback of an SDK version through multiple application developers that each use the SDK version.

SDK updates may affect a large number of applications. For example, minor versions may be automatically updated by computing system 202 which may affect applications that depend on the corresponding major version of the SDK on the device. Computing system 202 may provide the SDK modules with the latest minor version available for a requested major version.

Safeguards may be used to minimize the negative impact of a bad SDK version, including a progressive, gradual rollout of new SDK versions. (such as to a fraction of users). Tooling for SDK Developers may be used to monitor the SDK rollout, with crash reporting functionality. The system may have an ability to roll back an SDK to a previous version as needed. The system may keep impacted applications informed about SDK updates and enable applications to report issues with SDKs.

SDK package module 215 may package the SDK bundle into an SDK package configured to be installed on a device (e.g., user computing device 220 of FIG. 2B) for access by one or more applications installed on the device. SDK package module 215 may format SDK builds as a stand-alone runnable object such that the SDK package plus all dependencies are packaged together in a single deliverable item independent of the application package.

Application package module 225 may generate an application package (e.g., application package 117) from the application bundle 116 provided by the application developer. Application package module 225 may configure the application to be installed on a device (e.g., user computing device 220 of FIG. 2B). Application package module 225 may format applications such that they may be run in a first process and interact with an SDK in a separate process.

Software package module 227 may combine the application package and the SDK package into a software package for sending to a device, such as user computing device 120. In another example, software package module 227 may send the application package and the SDK package in separate packages (e.g., files) in the same or separate transmissions to user computing device 120.

FIG. 2B is a block diagram illustrating example user computing device 220 that sandboxes an SDK for an application, in accordance with one or more aspects of the present disclosure. FIG. 2B illustrates one example of user computing device 120, as illustrated in FIG. 1. User computing device 220 may include user devices such as smartphones, personal computers, smart watches, and may be in communication with remote computing systems (e.g., computing system 102), over one or more networks (e.g.. network 145). Many other examples of user computing device 220 may be used in other instances and may include a subset of the components included in example user computing device 220 or may include additional components not shown in FIG. 2B.

As shown in the example of FIG. 2B, user computing device 220 includes processors 237, one or more input/output components, such as user interface components (UIC) 239, one or more communication units 242, and one or more storage devices 224. Storage devices 224 of user computing device 220 may include distribution modules 210 and operating system 244, and UIC 239 may include I/O (input/output) devices 241.

One or more communication units 242 of user computing device 220, for example, may communicate with external devices by transmitting and/or receiving data at user computing device 220. such as to and from remote computer systems, such as computing system 102 of FIG. 1. For example, user computing device 220 may receive, through communication units 242, install package 122 from computing system 102.

In one example, sandbox 246 contains SDK 247 that is used by application 249 but sandbox 246 does not contain application 249. Sandbox 246 may be a controlled. restricted environment to run and execute code. This environment helps developers isolate and protect system resources from malware and other kinds of cyberthreats. Code in sandbox cannot take malicious action against code outside the sandbox because it does not have the appropriate default user privileges required to do so.

In the example of FIG. 2B, platform 253 maintains sandbox 246 for SDK 247 and sandbox 251 for application 249. Sandbox 246 and sandbox 251 may be separate process maintained by operating system 244 and/or platform 253. For example, platform 253 may separate the SDK 247 and application 249 using constructs of the operating system 244. For example, if the operating system 244 is a Linux operating system or other operating system that uses user IDs (UIDs), platform 253 may assign unique UIDs to application 249 and SDK 247 so as to produce kernel level sandboxes. In this example, because sandboxes 246 and 251 are at the kernel level, the sandbox security model extends to native code and OS applications, and all software above the kernel, including OS libraries, application runtime and application frameworks.

The logical separation between an application and its SDKs disappears when the software package is compiled. SDKs typically have the same data access privileges as the application. SDKs may in particular access sensitive user data (such as location information) or application data, sometimes without the application developer's knowledge. Thus, even when sandboxing is used, the SDK and application are typically contained by the same sandbox.

Sandbox 246 (containing SDK 247 but not application 249) may provide a clear boundary between application 249 and SDK 247. In one embodiment, Sandbox 246 provides SDK 247 limited data access, a separate context, and no permissions. Separating SDK 247 from application 249 that depends on it may enforce policies through runtime isolation. Separate SDK 247 also benefits from better updatability, because user computing device 220 may update SDK 247 independently from application 249.

SDK 247 may be an advertising SDK. Platform 253 may give SDK 247 access to privacy preserving application programing interfaces (APIs) suited for ad targeting. Platform 253 may also use a set of policies that dictate what types of ads SDK 247 may serve. Tools at platform 253 may enforce such policies.

SDK 247 may be shared by multiple applications at user computing device 220. This means that SDK 247 need only be sent once to user computing device 220. As discussed with respect to FIG. 3, application 249 may declare a dependency on SDK 247 and the user computing device may then enable application 249 to interact with SDK 247 as needed.

Operating system 244 and/or platform 253 may control the installation and uninstallation of SDK 247. Operating system 244 and/or platform 253 may control the lifecycle of SDK 247 on user computing device 220, including updating and disabling SDK 247. Operating system 244 and/or platform 253 may enable a rollback of the SDK version at user computing device 220 by SDK developers. In one example, SDK 247 is not directly uninstalled by users.

Operating system 244 and/or platform 253 may maintain backwards compatibility and run other applications which are combined with the SDK, as well as separated SDK 247 and application 249 shown in FIG. 2B. Such backwards compatibility enables previously created applications to run on user computing device 220.

In one example, applications only explicitly declare the major version of the SDKs they depend on and only implicitly depending on their latest minor version User computing device 120 installs an SDK when its corresponding application is installed because applications are unable to run without all the SDKs they depend on. At runtime, the SDK may run in a sandbox and the platform may join the SDK and the application via the dependency declaration. In one example, multiple major versions of an SDK may be installed on the device, but only one minor version per major version.

Example communication units 242 include a network interface card (e.g., such as an Ethernet card), an optical transceiver, a radio frequency transceiver, or any other type of device that can send and/or receive information. Other examples of communication units 242 may be devices configured to transmit and receive Ultrawideband^{®}, Bluetooth^{®}, GPS, 3G, 4G, and Wi-Fi^{®}, etc. that may be found in computing devices, such as mobile devices and the like. As shown in the example of FIG. 2B, communication channels 243 may interconnect each of the components as shown for inter-component communications (physically, communicatively, and/or operatively). In some examples, communication channels 243 may include a system bus, a network connection (e.g., to a wireless connection as described above), one or more inter-process communication data structures, or any other components for communicating data between hardware and/or software locally or remotely.

One or more storage devices 224 within user computing device 220 may store information, such as operating system 244, sandbox 246, SDK 247 and application 249 and other data discussed herein, for processing during operation of user computing device 220. In some examples, one or more storage devices of storage devices 224 may be a volatile or temporary memory. Examples of volatile memories include random access memories (RAM), dynamic random access memories (DRAM), static random access memories (SRAM), and other forms of volatile memories known in the art. Storage devices 224, in some examples, may also include one or more computer-readable storage media. Storage devices 224 may be configured to store larger amounts of information for longer terms in non-volatile memory than volatile memory. Examples of non-volatile memories include magnetic hard discs, optical discs, floppy discs, flash memories, or forms of electrically programmable memories (EPROM) or electrically erasable and programmable (EEPROM) memories. Storage devices 224 may store program instructions and/or data associated with operating system 244 and distribution modules 210.

One or more I/O devices 241 of user computing device 220 may receive inputs and generate outputs. Examples of inputs are tactile, audio, kinetic, and optical input to name only a few examples. Input devices of I/O devices 241, in one example, may include a touchscreen, a touch pad, a mouse, a keyboard, a voice responsive system, a video camera, buttons, a control pad, a microphone or any other type of device for detecting input from a human or machine. Output devices of I/O devices 241, may include, a sound card, a video graphics adapter card, a speaker, a display, or any other type of device for generating output to a human or machine.

Sandbox 246, SDK 247, and application 249 may perform operations described herein using software, hardware, firmware, or a mixture of both hardware, software, and firmware residing in and executing on user computing device 220 or at one or more other remote computing devices (e.g., cloud-based application - not shown). User computing device 220 may execute Sandbox 246, SDK 247, and application 249 as or within a virtual machine executing on underlying hardware. Sandbox 246, SDK 247, and application 249 may be implemented in various ways, for example, as a downloadable or pre-installed application, remotely as a cloud application or as part of operating system 244 of user computing device 220. Other examples of user computing device 220 that implement techniques of this disclosure may include additional components not shown in FIGS. 1, 2A or 2B.

In the example of FIG. 2B, one or more processors 237 may implement functionality and/or execute instructions within user computing device 220. For example, one or more processors 237 may receive and execute instructions that provide the functionality of UIC 239, communication units 242, and one or more storage devices 224 and operating system 244 to perform one or more operations as described herein. One or more processors 237 may include central processing unit (CPU) 238. Examples of CPU 238 include, but are not limited to, a digital signal processor (DSP), a general-purpose microprocessor, a tensor processing unit (TPU); a neural processing unit (NPU); a neural processing engine; a core of a CPU, VPU, GPU, TPU, NPU or other processing device, an application specific integrated circuit (ASIC), a field programmable logic array (FPGA), or other equivalent integrated or discrete logic circuitry, or other equivalent integrated or discrete logic circuitry,

One or more processors 237 may implement functionality and/or execute instructions within user computing device 220. For example, one or more processors 237 may receive and execute instructions that provide the functionality of some or all of sandbox 246, SDK 247, and application 249 to perform one or more operations and various functions described herein.

Computing device 220 may receive install packages that include an application package and an SDK package. The application may declare a dependency on an SDK version. Computing device 220 may use the declared dependency to determine that an SDK version in an SDK package matches the dependency declared by the application. For example, the application may indicate a major version of the SDK that the application is dependent on. Computer device 220 may also select a minor version corresponding to the major version, such as the most recent minor version of the SDK, to run with the application.

Computing device 220 may support runtime separation of SDKs from applications using platform 253, as discussed above. Computing device 220 may run the selected SDK 247 in a first process on the user computing device, such as in sandbox 246, and the application in a second process distinct from the first process on the user computing device. The SDK 247 in the first process may be restricted from access to data of the application in the second process. SDK 247 may be less of a security and privacy risk because it cannot access the application data. Application 249 in the second process may use the functionality of the SDK 247 as it runs in the first process.

The SDKs and applications may also be updated independently. Computing device 220 may receive new minor versions of the SDK without receiving an application at the same time and if computing device 220 already has the correct SDK, computing device 220 does not have to resend the same SDK with a new version of the application.

FIG. 3 is a diagram illustrating examples of published versions of stand-alone SDK builds that may be distributed and installed via a software package that includes SDK package on user devices. Published versions of stand-alone SDK builds may be distributed by an application store (e.g., computing system 102 and 202 of FIGS. 1 and 2A) and installed via an install package (e.g., install package 122) that includes an SDK package on user devices (e.g., user computing device 120 of FIG. 1 and user computing device 220 of FIG. 2.B ). For example, application 352 declared, when the application was developed, a dependency on SDK major version 1.0. In one example, a host (e.g., application store) publishes a newer version of the SDK, such as SDK package 354 generated by computing system 202, that includes major versions 1.0 and 2.0 and minor versions 1.1 and 2.1. Because application 352 declared major version 1.0, application 352 would automatically use the updated minor version 1.1 and not the older major version 1.0 or any of the 2.0 versions. This is similarly illustrated with application 356 and SDK package 358 that declared major version 1.0 utilizing minor version 1.2 in updated SDK package 358.

Including multiple major versions within a single SDK package may enable multiple applications on the same device (e.g., user computing device 120) to declare and utilize different versions of the SDK included in SDK package 360 without having to update the applications or request additional SDK builds. For example, SDK package 360 may include two or more major version and associated minor versions. Application 362 may declare major version 2.0 and application 364 may declare major version 1.0 of the SDK included in SDK package 360. In this example, application 362 would utilize the latest minor version 2.1 and application 364 the latest minor version 1.2, both included within SDK package 360.

In the example of FIG. 3, an application developer may upgrade a major version (to SDK V2.1), but because application 364 declares a dependency on an older major version (SDK V1.2), SDK versions V2.1 and V1.2 are both maintained on the user computing device. Only one SDK per major version need be maintained on the user computing device because a new minor version may replace an old minor version at the user computing device.

The "major version" / "minor version" model is just one example implementation of distributing sets of mutually substitutable SDK versions. In this example, all minor versions under the same major version are substitutable with each other because an application depending on one of the major or minor versions is ensured to be compatible with all of them within the same version. As such, minor versions belonging to different major versions, in this example, may not be substitutable with each other and conflict at runtime.

**In** other examples, SDK developers may upload an SDK bundle with multiple versions of the SDK builds and provide identifiers to groups of SDK builds that are mutually substitutable. For example, an SDK developer may include a graph where each SDK version is a node, and each connected component in the graph is a group of SDK build versions that may substitute each other. The application store may provide an updated SDK package that includes a new SDK build version to a device if the two (installed and new) versions belong to the same group of mutually substitutable SDK build versions.

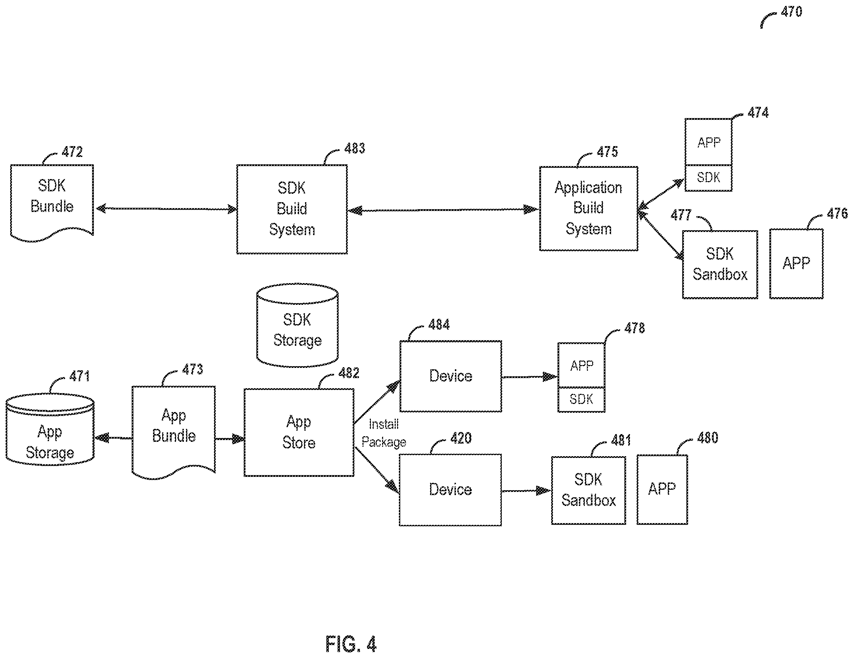

FIG. 4 is a diagram illustrating an example workflow 470 showing a flows to publish an SDK package including SDK builds that may be distributed and installed via a software package (e.g., install package 122 to user devices, such as user computing device 120 of FIG. 1 and user computing device 220 of FIG. 2B ), in accordance with one or more aspects of the present disclosure. FIG. 4 is described below in the context of computing system 102 of FIG. 1 and computing system 202 of FIG. 2A. For example, application store 482 may be implemented in computing system 102 of FIG. 1 and computing system 202 of FIG. 2A. In other examples, SDK build system 483 and application build system 475 may be implemented by computing system 102 and computing system 202, implemented on a different computer system, or locally on a developer's device (e.g., application developer computing device 112 and SDK developer computing device 114 of FIG. 1), or any combination thereof.

FIG. 4 includes SDK bundle 472, application package 474 and application bundle 476, and SDK 477. FIG. 4 additionally includes application store 482 that provides application package 478, application 480, and SDK 481 via an install package (e.g., install package 122) of FIG. 1) from application store 482. As illustrated, , application package 478 includes the application code and SDK code packaged into a single inseparable file (e.g., Java executable file) at application development time and is distributed through application store 482 (e.g., computing system 102, 202). For example, as discussed above with respect to FIG. 1 to support backwards compatibility, application store 482 may generate the install package by merging the SDK package (e.g., from SDK bundle 472) into the application package (e.g., from application bundle 473) for distribution to user devices that do not support runtime separation of SDKs from applications.

In one example, in accordance with one or more aspects of the present disclosure, SDK bundle 472 may be provided to the application development environment and the application store 482. SDK bundle 472 may be unbundled into SDK 477 and run separately from application bundle 476 in a sandboxed environment. In one example, SDK 477 includes one or more SDK builds that may include a multitude of major and minor version builds (e.g., v1.0, v1.1, v2.0, etc.). At development time, because the SDK code is not directly integrated into the application, application bundle 476 declares which major version (e.g., v2.0) of the SDK build it will depend upon for execution after installation on a device. This declaration permits application store 482 to manage, package and distribute the contents of SDK bundle 472 (e.g., SDK package 360) to devices independently of application bundle 476.

In one example, application store 482 distributes application bundle 476 received from the application development environment for packaging and distribution to a device (e.g., user computing device 120). In one example, application bundle 476 may be received from an application developer and stored in application storage 471 as application bundle 473. Application store 482 may retrieve and include application bundle 473 in an install package for distribution with or without an SDK bundle depending on destination device configuration. Application store 482 may separately package and distribute SDK 481 to the device to install and execute in a process separate from the application (e.g., sandboxed environment). In one example, an updated SDK bundle (e.g., new version of SDK bundle 472) is provided to application store 482 and may include new major and minor versions of the SDK builds. Application store 482 may package and distribute (e.g., push out) the updated SDK bundle (e.g., SDK 481) to user devices independent of the version of application 480.

In one example, application store 482 may check and enforce policies against the contents of SDK bundle 472 prior to distributing SDK 481. This provides one example advantage of providing security and data protection against an SDK bundle that may compromise data (e.g., user data), violate application store policies, and fraud, such as creating false clicks for payment within an advertising SDK executing in conjunction with an application.

In one example, an SDK developer may use the SDK build system 483 to create a new SDK module. SDK build system 483 may download any transitive dependencies from external repositories, and then compile, optimize and package the SDK. SDK build system 483 may validate the SDK to ensure it meets privacy and other and store the SDK bundle in SDK storage.

At application build system 475, application developers may have the SDK code that will be fused into the application for faster incremental builds. The application developer may also side-load the SDK into a sandbox testing environment.

Application store 482 may store and provide install packages to devices. In the example of FIG. 4, device 484 is provided application package 478 and device 420 is provided separate application 480 and SDK 481.

Application store 482 may provide the latest minor version of the SDK to devices 484 and 420. When a new minor version is provided to application store 482 from the SDK developer. Application store 482 may repackage the install packages provided to devices 484 and 420.

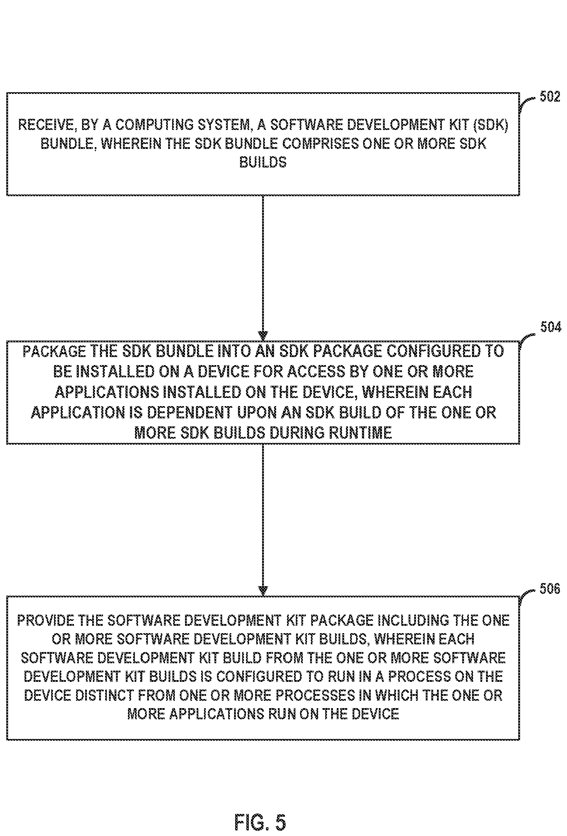

FIG. 5 is a flowchart illustrating an example mode of operation for a computing device to generate software packages for distribution to user devices, in accordance with one or more aspects of the present disclosure. FIG. 5 is described below in the context of computing system 102 of FIG. 1 and computing system 202 of FIG. 2A. Computing system 102 may act as a central location receiving application bundles 116 from an application developer and receiving SDK bundles 118 from an SDK developer in the sense that computing system 102 may be under the control of a single entity to receive and distribute applications and SDKs even when computing system 102 is distributed. The computing system 102 may provide SDKs such as in install package 122 to user computing device 120.

As shown in FIG. 5, computing system 102, for example, may receive a software development kit (SDK) bundle, wherein the SDK bundle includes one or more SDK builds (502). Computing system 102 may act as a central provider of the SDK builds rather than relying on application developers to combine the SDK with applications. Having computer system 102 receive the SDK bundles enables computing system 102 to act as such a central provider of the SDK builds.

Computing system 102 may package the SDK bundle into an SDK package configured to be installed on a device (e.g., user computing device 120) for access by one or more applications installed on the device, wherein each application is dependent upon an SDK build of the one or more SDK builds during runtime (504). The computing device may output the SDK package including the one or more SDK builds to the device, wherein each SDK build is configured to run in a separate process on the device with respect to each corresponding application (506). The SDK package may be part of install package 122 provided to the device (such as, user computing device 120). Having each SDK build configured to run in a separate process on the device with respect to each corresponding application enables the device (such as, user computing device 120) to run the SDK in a different process than the application. This provides security and privacy advantages because the SDK may be restricted from having all the privileges of the application. For example, the device (such as, user computing device 120) may sandbox the SDK such that it does not have access to application data because the SDK does not run in the same process as the application.

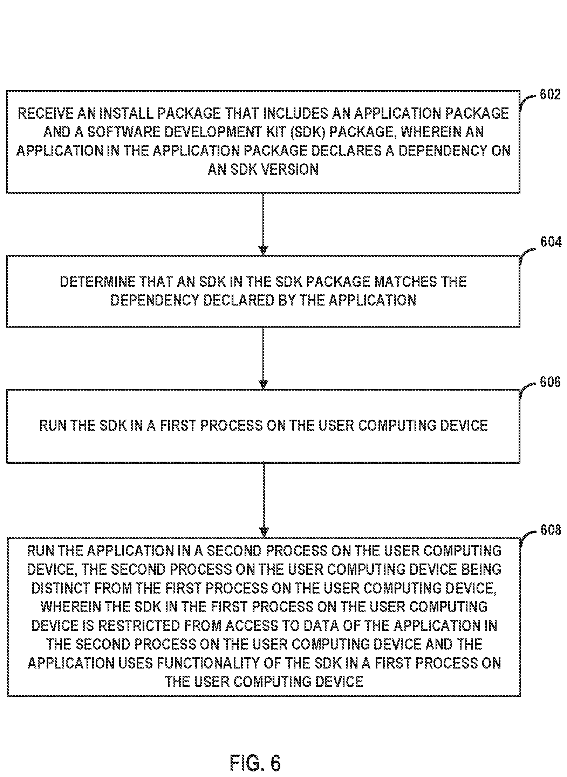

FIG. 6 is a flowchart illustrating an example mode of operation for a user computing device to run an SDK and application in different processes, in accordance with one or more aspects of the present disclosure. FIG. 6 is described below in the context of user computing device 120 of FIG. 1 and user computing device 220 of FIG. 2B. As shown in FIG. 6, user computing device 120, for example, may receive an install package that includes an application package and a software development kit (SDK) package, wherein an application in the application package declares a dependency on an SDK version (602). User computing device 120 may use the declaration of dependency of the application on the SDK version to avoid having to run a combined application and SDK, which is typically run as a single process.

User computing device 120 may determine that an SDK in the SDK package matches the dependency declared by the application (604). User computing device 120 may run the SDK in a first process on the user computing device 120 (606). User computing device 120 may run the application in a second process on user computing device 120, the second process on user computing device 120 being distinct from the first process on the user computing device 120, wherein the SDK in the first process on user computing device 120 is restricted from access to data of the application in the second process on user computing device 120 and the application uses functionality of the SDK in a first process on user computing device 120 (608). Because user computing device 120 runs the application and SDK in separate processes, user computer device may restrict the operations of the SDK and improve privacy and security such as by restricting access to data of the application. User computing device 120 may thus sandbox the SDK in a way that would not be possible if a combined SDK and application is run in a single process.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of a computer-readable medium.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

Various examples of the invention have been described. These and other examples are within the scope of the following claims.

## Claims

1. A method comprising:
receiving, by a computing system (102, 202), a software development kit bundle (118), wherein the software development kit bundle includes one or more software development kit builds;
packaging, by the computing system, the software development kit bundle into a software development kit package (119) configured to be installed on a device (120, 220) for access by one or more applications (128) installed on the device, wherein each application from the one or more applications installed on the device is dependent upon a software development kit build from the one or more software development kit builds during runtime; and
providing, by the computing system and to the device, the software development kit package including the one or more software development kit builds, wherein each software development kit build from the one or more software development kit builds is configured to run in a process on the device distinct from one or more processes in which the one or more applications run on the device.

2. The method of claim 1, further comprising:
receiving, by the computing system, an application bundle, wherein the application bundle includes an application build configured to be installed on the device and configured to access the software development kit build from the one or more software development kit builds during runtime on the device; and
packaging, by the computing system, the application bundle into an application package configured to be received and installed by the device.

3. The method of any one of claims 1-2, further comprising:
receiving, by the computing system, an updated software development kit bundle that includes an updated version of the software development kit build from the one or more software development kit builds.

4. The method of claim 3, wherein the updated version of the software development kit build is a minor version of the software development kit build.

5. The method of claim 3, wherein the updated version of the software development kit build is based on a major version of the software development kit build declared by at least one application of the one or more applications.

6. The method of any one of claims 1-5, wherein the one or more software development kit builds from the software development kit bundle includes a plurality of major versions and one or more minor versions that each correspond to a major version from the plurality of major versions.

7. The method of any one of claims 1-6, wherein packaging the software development kit bundle into the software development kit package further comprises:
including one or more software development kit internal dependencies in the software development kit package, wherein one or more software development kit internal dependencies are dependencies accessed by the one or more applications installed on the device; and
avoiding dependency conflicts with the one or more applications by renaming each of the one or more software development kit internal dependencies.

8. The method of claim 7, wherein each of the one or more software development kit internal dependencies is a library file.

9. The method of any one of claims 1-8, wherein the software development kit package is configured to prevent the device from initiating an uninstall of the software development kit package from the device.

10. The method of any one of claims 1-9, wherein providing, by the computing system and to the device, the software development kit package comprises:
determining that the device supports runtime separation of software development packages from applications.

11. The method of claim 10, further comprising:
responsive to a determination that the device does not support runtime separation of software development packages from applications:
generating a combined package by merging the SDK package with an application package; and
providing, by the computing system and to the device, the combined package.

12. A method comprising:
receiving, by a user computing device (120, 220), an install package (122) that includes an application package and a software development kit, SDK, package, wherein an application in the application package declares a dependency on an SDK version;
determining, by the user computing device, that an SDK in the SDK package matches the dependency declared by the application;
running, by the user computing device, the SDK in a first process on the user computing device;
running, by the user computing device, the application in a second process on the user computing device, the second process on the user computing device being distinct from the first process on the user computing device, wherein the SDK in the first process on the user computing device is restricted from access to data of the application in the second process on the user computing device and the application uses functionality of the SDK in a first process on the user computing device.

13. The method of claim 12, wherein the determining includes:
determining that the SDK is of a major version declared by the application; and determining that the SDK is of the most recent minor version for the major version.

14. A computing device comprising:
a memory; and
one or more processors operably coupled to the memory and configured to perform the method according to any one of the preceding claims.

15. A computer program product comprising instructions that, when executed, cause one or more processors of a computing device to perform any of the methods of claim 1-13.

## Patentansprüche

1. Verfahren, umfassend:
Empfangen eines Softwareentwicklungskit-Bündels (118) durch ein Rechensystem (102, 202), wobei das Softwareentwicklungskit-Bündel einen oder mehrere Softwareentwicklungskit-Builds beinhaltet;
Verpacken des Softwareentwicklungskit-Bündels durch das Rechensystem in ein Softwareentwicklungskit-Paket (119), das dazu konfiguriert ist, auf einer Vorrichtung (120, 220) installiert zu werden, auf die eine oder mehrere auf der Vorrichtung installierte Anwendungen (128) zugreifen können, wobei jede Anwendung aus der einen oder den mehreren auf der Vorrichtung installierten Anwendungen während der Laufzeit von einem Softwareentwicklungskit-Build aus dem einen oder den mehreren Softwareentwicklungskit-Builds abhängig ist; und
Bereitstellen des Softwareentwicklungskit-Pakets, einschließlich des einen oder der mehreren Softwareentwicklungskit-Builds durch das Rechensystem und an die Vorrichtung, wobei jeder Softwareentwicklungskit-Build aus dem einen oder den mehreren Softwareentwicklungskit-Builds dazu konfiguriert ist, in einem Prozess auf der Vorrichtung ausgeführt zu werden, der sich von einem oder mehreren Prozessen unterscheidet, in denen die eine oder die mehreren Anwendungen auf der Vorrichtung ausgeführt werden.

2. Verfahren nach Anspruch 1, ferner umfassend:
Empfangen eines Anwendungs-Bündels durch das Rechensystem, wobei das Anwendungs-Bündel einen Anwendungs-Build beinhaltet, der dazu konfiguriert ist, auf der Vorrichtung installiert zu werden, und dazu konfiguriert ist, während der Laufzeit auf der Vorrichtung auf den Softwareentwicklungskit-Build von dem einen oder den mehreren Softwareentwicklungskit-Builds zuzugreifen; und
Verpacken des Anwendungs-Bündels durch das Rechensystem in ein Anwendungs-Paket, das dazu konfiguriert ist, von der Vorrichtung empfangen und installiert zu werden.

3. Verfahren nach einem der Ansprüche 1-2, ferner umfassend:
Empfangen eines aktualisierten Softwareentwicklungskit-Bündels durch das Rechensystem, das eine aktualisierte Version des Softwareentwicklungskit-Builds aus dem einen oder den mehreren Softwareentwicklungskit-Builds beinhaltet.

4. Verfahren nach Anspruch 3, wobei die aktualisierte Version des Softwareentwicklungskit-Builds eine Nebenversion des Softwareentwicklungskit-Builds ist.

5. Verfahren nach Anspruch 3, wobei die aktualisierte Version des Softwareentwicklungskit-Builds auf einer Hauptversion des Softwareentwicklungskit-Builds basiert, die durch mindestens eine Anwendung der einen oder mehreren Anwendungen deklariert wurde.

6. Verfahren nach einem der Ansprüche 1-5, wobei das eine oder die mehreren Softwareentwicklungskits, die aus dem Softwareentwicklungskit-Bündel erstellt werden, eine Vielzahl von Hauptversionen und eine oder mehrere Nebenversionen beinhalten, die jeweils einer Hauptversion aus der Vielzahl von Hauptversionen entsprechen.

7. Verfahren nach einem der Ansprüche 1-6, wobei das Verpacken des Softwareentwicklungskit-Bündels in das Softwareentwicklungskit-Paket ferner Folgendes umfasst:
Beinhalten einer oder mehrerer Softwareentwicklungskit-internen Abhängigkeiten in dem Softwareentwicklungskit-Paket, wobei eine oder mehrere Softwareentwicklungskit-interne Abhängigkeiten Abhängigkeiten sind, auf die durch die eine oder mehreren auf der Vorrichtung installierten Anwendungen zugegriffen wird; und
Vermeiden von Abhängigkeitskonflikten mit der einen oder den mehreren Anwendungen durch Umbenennen jeder der einen oder der mehreren internen Abhängigkeiten des Softwareentwicklungskits.

8. Verfahren nach Anspruch 7, wobei jede der einen oder mehreren internen Abhängigkeiten des Softwareentwicklungskits eine Datei einer Bibliothek ist.

9. Verfahren nach einem der Ansprüche 1-8, wobei das Softwareentwicklungskit-Paket dazu konfiguriert ist, zu verhindern, dass die Vorrichtung eine Deinstallation des Softwareentwicklungskit-Pakets von der Vorrichtung initiiert.

10. Verfahren nach einem der Ansprüche 1-9, wobei das Bereitstellen des Softwareentwicklungskit-Pakets durch das Rechensystem an die Vorrichtung Folgendes umfasst:
Bestimmen, dass die Vorrichtung eine Trennung von Softwareentwicklungs-Paketen von Anwendungen während der Laufzeit stützt.

11. Verfahren nach Anspruch 10, ferner umfassend:
als Reaktion auf eine Bestimmung, dass die Vorrichtung keine Trennung von Softwareentwicklungs-Paketen von Anwendungen während der Laufzeit stützt:
Erzeugen eines kombinierten Pakets durch Zusammenfügen des SDK-Pakets mit einem Anwendungs-Paket; und
Bereitstellen des kombinierten Pakets durch das Rechensystem und an die Vorrichtung.

12. Verfahren, umfassend:
Empfangen eines Installations-Pakets (122), das ein Anwendungs-Paket und ein Softwareentwicklungskit- (software development kit, SDK-) Paket beinhaltet, durch eine Benutzerrechenvorrichtung (120, 220), wobei eine Anwendung in dem Anwendungs-Paket eine Abhängigkeit von einer SDK-Version deklariert;
Bestimmen, dass ein SDK in dem SDK-Paket mit der durch die Anwendung deklarierten Abhängigkeit übereinstimmt, durch die Benutzer-Rechenvorrichtung;
Ausführen des SDK in einem ersten Prozess auf der Benutzerrechenvorrichtung durch die Benutzerrechenvorrichtung;
Ausführen der Anwendung in einem zweiten Prozess auf der Benutzerrechenvorrichtung durch die Benutzerrechenvorrichtung,
wobei der zweite Prozess auf der Benutzerrechenvorrichtung von dem ersten Prozess auf der Benutzerrechenvorrichtung verschieden ist, wobei das SDK in dem ersten Prozess auf der Benutzerrechenvorrichtung von dem Zugang zu Daten der Anwendung in dem zweiten Prozess auf der Benutzerrechenvorrichtung beschränkt ist und die Anwendung Funktionalität des SDK in einem ersten Prozess auf der Benutzerrechenvorrichtung verwendet.

13. Verfahren nach Anspruch 12, wobei das Bestimmen Folgendes beinhaltet:
Bestimmen, dass das SDK zu einer durch die Anwendung deklarierten Hauptversion gehört; und Bestimmen, dass das SDK zu einer neuesten Nebenversion für die Hauptversion gehört.

14. Rechenvorrichtung, umfassend:
einen Speicher; und
einen oder mehrere Prozessoren, die betriebsfähig mit dem Speicher gekoppelt und dazu konfiguriert sind, das Verfahren nach einem der vorhergehenden Ansprüche durchzuführen.

15. Computerprogrammprodukt, umfassend Anweisungen, die, wenn sie ausgeführt werden, einen oder mehrere Prozessoren einer Rechenvorrichtung veranlassen, eines der Verfahren nach den Ansprüchen 1-13 durchzuführen.

## Revendications

1. Procédé comprenant :
la réception, par un système informatique (102, 202), d'un ensemble de kits de développement de logiciel (118), dans lequel l'ensemble de kits de développement de logiciel comporte une ou plusieurs versions du kit de développement de logiciel ;
l'intégration, par le système informatique, de l'ensemble de kits de développement de logiciel dans un paquet de kits de développement de logiciel (119) configuré pour être installé sur un dispositif (120, 220) pour être accessible par une ou plusieurs applications (128) installées sur le dispositif, dans lequel chaque application parmi les une ou plusieurs applications installées sur le dispositif est dépendante d'une version du kit de développement de logiciel parmi les une ou plusieurs versions du kit de développement de logiciel pendant l'exécution ; et
la fourniture, par le système informatique et au dispositif, du paquet de kits de développement de logiciel comportant les une ou plusieurs versions du kit de développement de logiciel, dans lequel chaque version du kit de développement de logiciel parmi les une ou plusieurs versions du kit de développement de logiciel est configurée pour s'exécuter dans un processus sur le dispositif distinct parmi un ou plusieurs processus dans lesquels les une ou plusieurs applications s'exécutent sur le dispositif.

2. Procédé selon la revendication 1, comprenant également :
la réception, par le système informatique, d'un ensemble d'applications, dans lequel l'ensemble d'applications comporte une version d'application configurée pour être installée sur le dispositif et configurée pour accéder à la version du kit de développement de logiciel parmi les une ou plusieurs versions du kit de développement de logiciel pendant l'exécution sur le dispositif ; et
l'intégration, par le système informatique, de l'ensemble d'applications dans un paquet d'applications configuré pour être reçu et installé par le dispositif.

3. Procédé selon l'une quelconque des revendications 1 et 2, comprenant également :
la réception, par le système informatique, d'un ensemble de kits de développement de logiciel mis à jour qui comporte une version mise à jour de la version du kit de développement de logiciel parmi les une ou plusieurs versions du kit de développement de logiciel.

4. Procédé selon la revendication 3, dans lequel la version mise à jour de la version du kit de développement de logiciel est une version mineure de la version du kit de développement de logiciel.

5. Procédé selon la revendication 3, dans lequel la version mise à jour de la version du kit de développement de logiciel est basée sur une version majeure de la version du kit de développement de logiciel déclaré par au moins une application parmi les une ou plusieurs application.

6. Procédé selon l'une quelconque des revendications 1 à 5, dans lequel les une ou plusieurs versions du kit de développement de logiciel parmi l'ensemble de kits de développement de logiciel comportent une pluralité de versions majeures et une ou plusieurs versions mineures qui correspondent chacune à une version majeure parmi la pluralité de versions majeures.

7. Procédé selon l'une quelconque des revendications 1 à 6, dans lequel l'intégration de l'ensemble de kits de développement de logiciel dans le paquet de kits de développement de logiciel comprend également :
l'inclusion d'une ou plusieurs dépendances internes du kit de développement de logiciel dans le paquet de kits de développement de logiciel, dans lequel une ou plusieurs dépendances internes du kit de développement logiciel sont des dépendances auxquelles accèdent les une ou plusieurs applications installées sur le dispositif ; et
le fait d'éviter les conflits de dépendance avec les une ou plusieurs applications en renommant chacune des une ou plusieurs dépendances internes du kit de développement de logiciel.

8. Procédé selon la revendication 7, dans lequel chacune des une ou plusieurs dépendances internes de kit de développement de logiciel est un fichier de bibliothèque.

9. Procédé selon l'une quelconque des revendications 1 à 8, dans lequel le paquet de kits de développement de logiciel est configuré pour empêcher le dispositif de lancer une désinstallation du paquet de kits de développement de logiciel du dispositif.

10. Procédé selon l'une quelconque des revendications 1 à 9, dans lequel la fourniture, par le système informatique et au dispositif, du paquet de kits de développement de logiciel comprend :
la détermination selon laquelle le dispositif prend en charge la séparation d'exécution de paquets de développement de logiciel des applications.

11. Procédé selon la revendication 10, comprenant également :
en réponse à une détermination que le dispositif ne prend pas en charge la séparation d'exécution de paquets de développement de logiciel des applications :
la génération d'un paquet combiné en fusionnant le paquet SDK avec un paquet d'applications ; et
la fourniture, par le système informatique et au dispositif, du paquet combiné.

12. Procédé comprenant :
la réception, par un dispositif informatique utilisateur (120, 220), d'un paquet d'installations (122) qui comporte un paquet d'applications et un paquet de kits de développement de logiciel, SDK, dans lequel une application dans le paquet d'applications déclare une dépendance sur une version du SDK ;
la détermination, par le dispositif informatique utilisateur, qu'un SDK dans le paquet SDK correspond à la dépendance déclarée par l'application ;
l'exécution, par le dispositif informatique utilisateur, du SDK dans un premier processus sur le dispositif informatique utilisateur ;
l'exécution, par le dispositif informatique utilisateur, de l'application dans un second processus sur le dispositif informatique utilisateur, le second processus sur le dispositif informatique utilisateur étant distinct du premier processus sur le dispositif informatique utilisateur, dans lequel le SDK dans le premier processus sur le dispositif informatique utilisateur est limité dans son accès aux données de l'application dans le second processus sur le dispositif informatique utilisateur et l'application utilise la fonctionnalité du SDK dans un premier processus sur le dispositif informatique utilisateur.

13. Procédé selon la revendication 12, dans lequel la détermination comporte :
la détermination que le SDK est d'une version majeure déclarée par l'application ; et la détermination que le SDK est de la version mineure la plus récente pour la version majeure.

14. Dispositif informatique comprenant :
une mémoire ; et
un ou plusieurs processeurs couplés de manière opérationnelle à la mémoire et configurés pour réaliser le procédé selon l'une quelconque des revendications précédentes.

15. Produit de programme informatique comprenant des instructions qui, lorsqu'elles sont exécutées, amènent un ou plusieurs processeurs d'un dispositif informatique à réaliser l'un quelconque des procédés selon les revendications 1 à 13.
